# EUROPEAN PATENT APPLICATION

(11) **EP 1 118 741 A2**
(43) Date of publication of application: **25.07.2001**
(21) Application number: 00830857.9
(22) Date of filing: 28.12.2000
(51) Int. Cl.: E05F 15/10, E05F 15/14, E05F 15/16, F16H 25/24, H02K 7/06

(54) **Rolling contact screw-and-nut transmission device, and linear actuator comprising this device**

(30) Priority: 21.01.2000 IT TO000060
(71) Applicant: A.E. Assemblaggi Elettromeccanici di Bonardo Valter e Boido Giudo Snc, 10044 Pianezza (Torino) (IT)
(72) Inventor: Gallo, Mario, 10135 Torino (IT)
(74) Representative: Notaro, Giancarlo

(57) **Abstract**

A linear actuator comprises an electric motor (2) and a screw-and-nut transmission device in which the nut member comprises a planet-carrier member (9) driven in rotation about the axis of the screw (3), and at least one planet (14) mounted so that it is free to turn on the planet-carrier member (9) about an axis (15) that is parallel to and set at a distance from the axis (3a) of the screw (3). The planet (14) has a plurality of collars (16) set in planes perpendicular to the axis of the screw (3) which engage respective portions of the bottom of the thread of the screw (3), in such a way that, as a result of the rotation of the planet-carrier member (9), the planet (14) rolls around the screw (3) forcing the latter to translate axially due to the engagement of each collar (16) against the sides of the respective portion of the thread of the screw.

## Description

The present invention relates to transmission devices of the type comprising a rotating member, with the function of nut, and a screw, prevented from rotation, which engages the rotating member to convert a rotation of said member into a translation of the screw.

In Italian patent application No. TO97A001020, the Applicant has proposed a linear actuator comprising an electric motor, a nut driven in rotation by the motor and engaging the screw, in which the nut is arranged inside the casing, and the screw is arranged at least partially through an axial cavity of the rotor of the electric motor.

Studies and tests carried out by the Applicant have proved that the sliding friction between the nut and the screw leads to fast wear of the surfaces that come into contact, and this renders the application of such a mechanism difficult to a linear actuator of the type specified above, which is subject to continuous and repeated actuations. Also known in the art are screw-and-nut devices with rolling contact that make use of ball screws. However, these devices have a high cost and are not easy to apply.

The purpose of the present invention is to provide a transmission device of the screw-and-nut type in which the parts in contact are subject to rolling friction only and which even so has a relatively simple and inexpensive structure.

With a view to achieving the above purpose, the subject of the invention is a transmission device comprising:
a rotating member, having the function of nut, and
a screw, prevented from rotation, which engages the rotating member, so as to convert a rotation of said member into a translation of the screw,
characterized in that said rotating member with the function of nut comprises a planet-carrier member driven in rotation about the axis of the screw, and at least one planet mounted so that it is free to turn on the planet-carrier member about an axis that is parallel to and arranged at a distance from the axis of the screw, said planet having at least one peripheral collar which is set in a plane perpendicular to the axis of the screw and engages, with rolling contact, a respective portion of the bottom of the thread of the screw, in such a way that, as a result of the rotation of the planet-carrier member, the planet rolls around the screw forcing the latter to translate axially due to the engagement of the collar against the sides of the respective portion of the thread of the screw.

In a preferred embodiment, the above-mentioned planet comprises a plurality of collars which are arranged in planes parallel to one another and are engaged in respective portions of the bottom of the screw thread. Preferably, said planet carrier carries a plurality of planets that are arranged at angular distances apart from one another. The screw may consist of a rigid bar or even of a flexible cable on which a helical spring is wound.

Another subject of the present invention is a linear actuator characterized in that it comprises an electric motor and a transmission device of the type specified above, the above-mentioned planet-carrier member being driven in rotation by said electric motor.

In a first embodiment, the planet-carrier member is driven directly by the electric motor. In this case the planet-carrier member is preferably arranged inside a casing which is rigidly connected to one end of the electric motor, and the shaft of the electric motor is tubular and is traversed by said screw.

In a second embodiment, the planet-carrier member is driven in rotation by the motor by means of a transmission. In this case, the electric motor may be of a conventional type, in that the screw does not have to pass through the shaft of the motor. The transmission may be such that the axis of rotation of the planet carrier, which is coincident with the axis of the screw, is parallel to the axis of the motor. Alternatively, the transmission may be chosen so that the axis of the screw is perpendicular to the axis of the motor.

In a further evolution of the linear actuator according to the invention, the said actuator may comprise a further screw-and-nut transmission device of the type specified above. In this case, the electric motor drives both devices simultaneously. In a first embodiment, the planet-carrier members of the two transmission devices are both connected by respective transmissions to the shaft of the electric motor, in such a way that the motor controls translation of two screws having their axes parallel to and arranged at a distance from the axis of the motor. In a second embodiment, the planet-carrier member of one of the two transmission devices is controlled directly by the motor and is in turn connected by a transmission to the planet-carrier member of the other transmission device in such a way that the motor controls translation of two screws, one of which has its axis coincident with the axis of the motor, whilst the axis of the other is parallel to and set a distance from the axis of the motor.

Due to the above characteristics, the screw-and-nut transmission device according to the invention and the linear actuator in which said device is used are reliable in terms of operation (owing to the fact that the parts in contact are subject to rolling friction only), and are, nonetheless, characterized by a simple and inexpensive structure.

In an alternative solution, the screw-and-nut transmission device according to the invention comprises:
a rotating member having the function of nut, and
a bar with circular cross section having the function of screw, prevented from rotation, which engages the rotating member to convert a rotation of said member into a translation of the bar,
said rotating member with the function of nut comprising a planet-carrier member driven in rotation about the axis of the bar, and at least one planet mounted so that it is free to turn on said planet carrier about an axis arranged a distance from the axis of the bar and inclined both with respect to the axis of the bar and with respect to a plane perpendicular to the axis of the bar,
said planet being in the form of a roller which has a circular section increasing from the centre towards the ends and being pressed in contact with the bar, in a point corresponding to its minimum section, by elastic means arranged between the structure of the planet-carrier member and the roller.

In this solution, the angle of inclination of the axis of the rollers with respect to the bar generates a component of thrust that causes the bar to advance.

The possible applications of the linear transmission device according to the invention as described above are innumerable. The device according to the invention may, for example, be advantageously used in the automotive field as a small-sized actuator for mobile members, such as car-seat headrests, in various devices for seat adjustment, for operating sliding doors, for lifting up spare wheels, for operating the jack for raising a vehicle, or as the actuator of a car-window regulator. In general, in the industrial field, the actuator according to the invention can be advantageously used in various applications where linear automation is required. In building engineering, the actuator according to the invention can, for instance, be used for controlling gates or doors, or as actuator in household appliances, or in pieces of furniture, such as arm-chairs or beds.

Further characteristics and advantages of the invention will emerge from the ensuing description referring to the annexed drawings, which are provided merely as non-limiting examples and in which:
Figure 1 is a sectional view of one first embodiment of a linear actuator according to the invention;
Figure 2 is a sectional view taken along the line II-II of Figure 1;
Figure 3 is a schematic perspective view of a detail of Figures 1 and 2;
Figure 4 is a partially sectional view of a second embodiment of the linear actuator according to the invention;
Figure 5 is a partially sectional view of a third embodiment of the linear actuator according to the invention;
Figure 6 is a partially sectional view of a fourth embodiment of the linear actuator according to the invention;
Figures 7 and 8 are perspective views illustrating two further variants of the actuator according to the invention;
Figure 9 is a schematic perspective view of a further embodiment of the invention;
Figure 10 is a sectional view at an enlarged scale of a detail of Figure 9, and
Figures 11-14 show further applications of the device according to the invention.

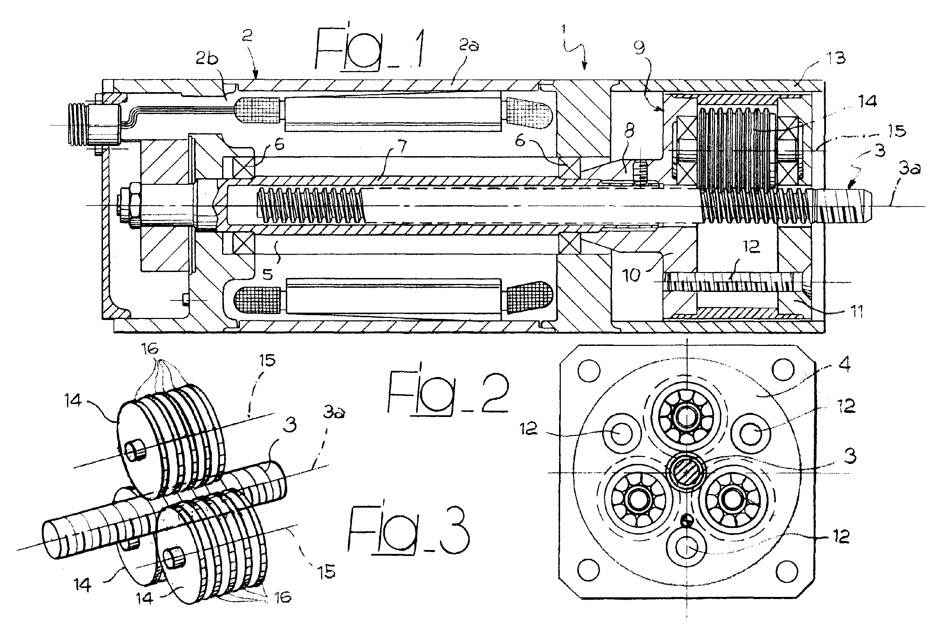

In Figure 1, the reference number 1 designates, as a whole, a linear actuator comprising an electric motor 2 that controls axial displacement of a screw 3 by means of a transmission device 4 according to the invention.

The electric motor 2 may be of any known type. It comprises a stator 2b arranged inside a cylindrical casing 2a, and a rotor 5 which is mounted so that it is free to turn inside the casing 2a on bearings 6 and which is rigidly connected to a tubular shaft 7 traversed by a screw 3 in the form of a threaded rigid bar.

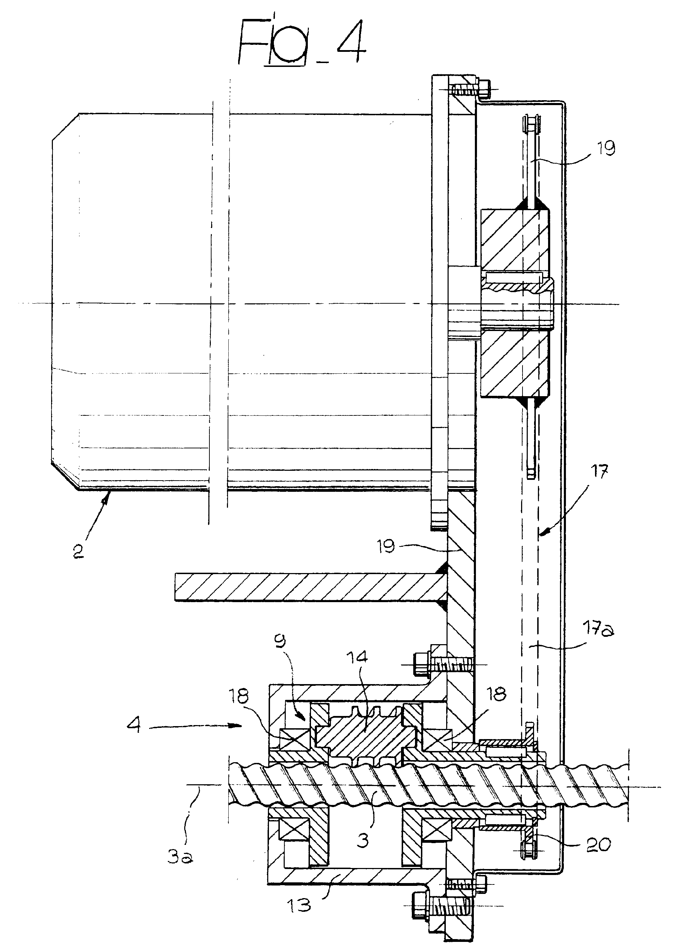

On one end of the tubular shaft 7 is mounted a hub 8 of a planet-carrier member 9, which, in the example illustrated, comprises two disks 10, 11 parallel to one another and set apart from one another, which are joined by screws 12 (only one of which may be seen in Figure 1). The planet-carrier member 9 is arranged inside a cylindrical shell 13 which is rigidly connected to one end of the casing 2a of the electric motor and which extends on the prolongation of the latter. In the example illustrated, the planet-carrier member 9 carries three planets 14 (only one of which may be seen in Figure 1 and which are instead clearly visible in Figure 3) in such a way that they are free to turn about three axes 15 that are parallel to the axis 3a of the screw 3 and are set at a distance from said axis. The three planets 14 are set at equal angular distances apart around the screw 3. Each planet comprises a plurality of collars 16 which are set in planes perpendicular to the axis 3a, and each of which engages a respective portion of the thread of the screw 3.

In operation, the activation of the electric motor 2 causes rotation of the shaft 7 of the electric motor, which transmits said rotation to the planet-carrier member 9. The planets 14 are thus forced to roll around the screw 3, causing a consequent axial displacement of the screw 3, which is prevented from rotating owing to the fact that its end protruding from the actuator is connected to a controlled member (not shown in the drawings) which cannot rotate about the axis 3a.

Owing to the engagement of each collar 16 against the sides of the respective portion of the thread of the screw 3, the latter is thus subjected to a thrust that causes it to move axially. Since the contact between the planets 14 and the screw 3 is by rolling, friction between the parts in contact is reduced to the minimum, and consequently also the wear of the respective surfaces is minimal. The planet-carrier member 9 with the planets 14 consequently behaves in a way equivalent to that of a rolling-friction nut-screw, but at the same time presents an extremely simple and inexpensive structure.

Figure 4 illustrates a second embodiment in which the planet-carrier member 9 is driven in rotation by the electric motor 2 by means of a chain transmission 17 which includes a chain 18 that meshes with a gear wheel 19 mounted on the shaft of the electric motor 2, as well as with a gear wheel 20 which is rigidly connected to the planet-carrier member 9, the latter being supported in rotation inside its own casing 4 by means of bearings 18. The casing 4 is in turn rigidly connected to a plate 19 which also supports the electric motor 2. The advantage deriving from the interposition of a transmission 17 between the electric motor and the transmission device 4 lies in the fact that the electric motor 2 can be of a conventional type, i.e., with a non-tubular shaft.

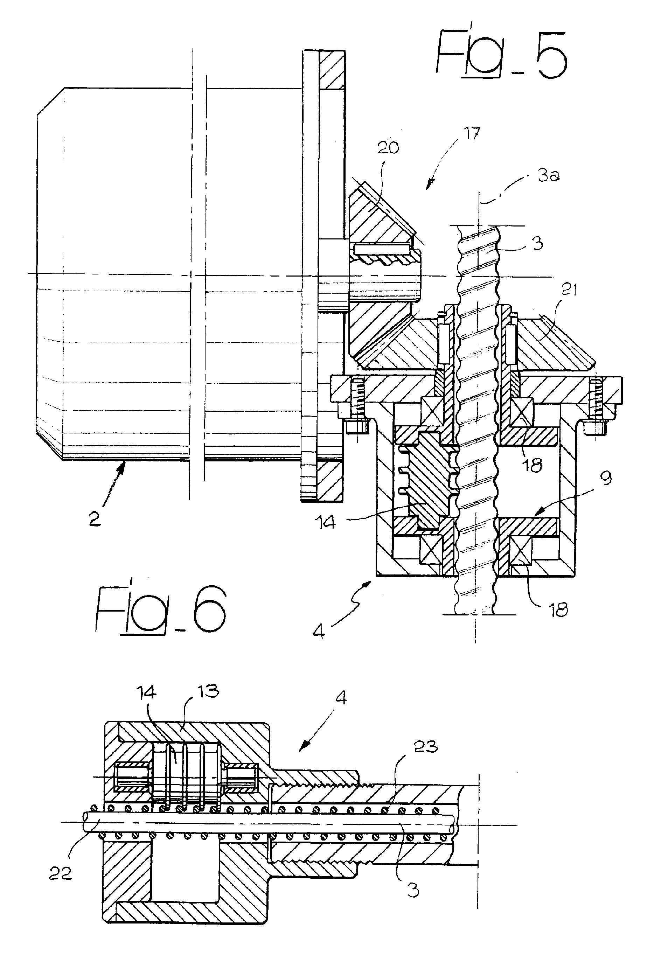

Figure 5 illustrates a variant of Figure 4, in which the axis 3a is perpendicular, instead of being parallel, to the axis of the electric motor 2. This result is obtained due to the fact that the transmission 17 that transmits rotation from the shaft of the electric motor 2 to the planet-carrier member 9 consists of a bevel-gear pair 20, 21, the bevel gears being connected, in rotation, respectively to the shaft of the electric motor 2 and to the planet-carrier member 9.

Figure 6 illustrates a further embodiment of the transmission device 4 in which the screw 3 consists of a flexible cable 22 on which a helical spring 23 is wound. The turns of the spring 23 define between them a helical channel which performs the function of a screw. The advantage of the embodiment illustrated in Figure 6 consists in the fact that the screw 3 is flexible, so that this embodiment can be advantageously used in all applications where this kind of flexibility is required, such as in the case of a window regulator device for a motor vehicle.

Figure 7 illustrates a variant of the device, in which the electric motor 2 drives in rotation a gear wheel 24 which meshes on opposite sides with two gear wheels 25, 26 that are each connected in rotation to a respective planet-carrier member 9 (not illustrated) of each one of two transmission devices 4 of a type similar, for example, to the one illustrated in Figure 6. With this arrangement, the motor 2 simultaneously controls advance in the same direction of the two screws 3 associated to the devices 4.

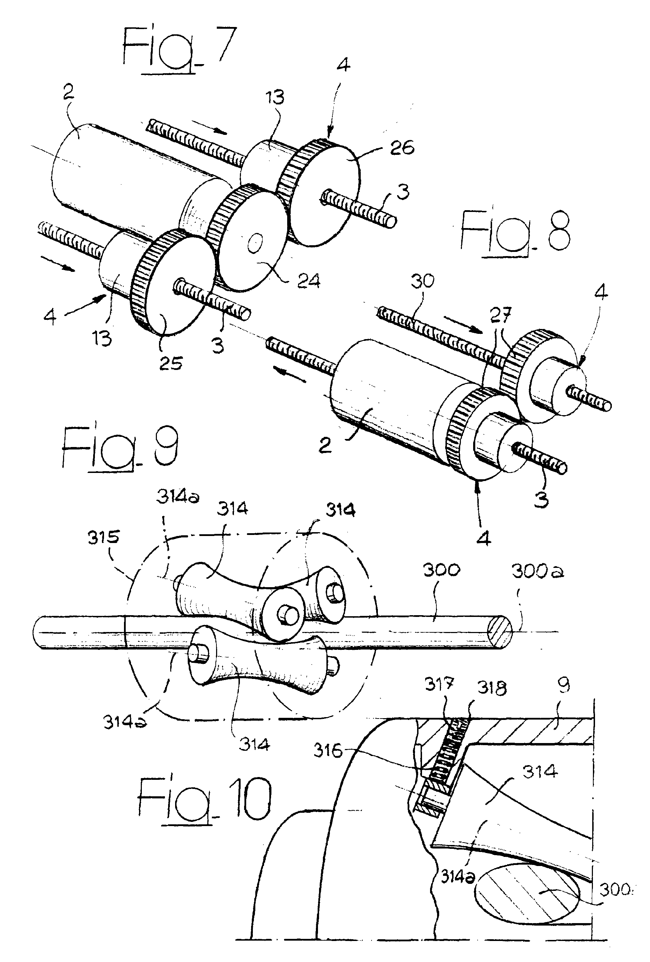

Figure 8 illustrates a further variant of the embodiment shown in Figure 1, in which the electric motor 2 directly controls a screw 3 which completely traverses an entirely tubular shaft of the motor 2, and moreover controls a second transmission device 4 by means of a pair of gears 27, so as to cause simultaneously the advance of a second screw 30 in a direction opposite to the direction of actuation of the first screw 3.

Figure 9 illustrates a different embodiment of the transmission device according to the invention. In this case, the screw is replaced by a member 300 having the function of a screw and consisting of a steel cylindrical bar. Around the said bar there engage three planets 314 which are set at equal angular distances apart and are carried, so that they can turn freely about their respective axes 314a, by the structure of the planet-carrier member, which is illustrated schematically with a dashed line and designated by the reference number 315, the said planet-carrier member being designed to be driven in rotation by the electric motor. Each planet 314 has its axis 314a inclined both with respect to the axis 330a of the bar 300 and with respect to a plane perpendicular to the axis 300a. In addition, each of the planets 314 is in the form of a roller, with a circular section increasing from the centre towards the ends. Finally, the ends of each roller 314 are subjected to the thrust of a spring 316 set between the axis of the roller 314 and a threaded grub screw 317 screwed into a hole 318 made in the body of the planet-carrier member 9.

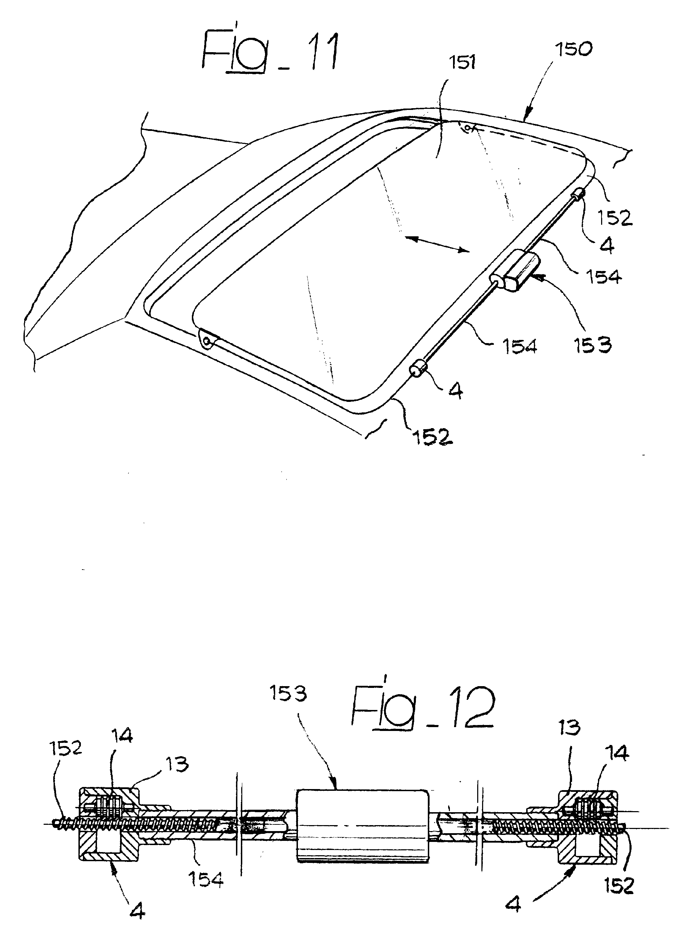

In Figure 10, the section of the circular-section bar 300 appears to be elliptical in that Figure 10 corresponds to a section in a plane containing the axis of the roller 314, i.e., a plane inclined with respect to a plane perpendicular to the axis 300a. On account of the inclination of the rollers 314, the rotation of the said rollers on the bar 300 generates a force having a component in the direction of the axis 300a, which causes the bar 300 to advance.

Figure 11 shows a motor-vehicle roof 150 comprising a slidable panel 151 driven by two flexible cables 152 of the type shown in Fig.6, with a core on which a helical spring is wound acting as a screw-thread. The two cables are engaged within guide means (not shown) which cause them to be arranged along the two sides of the panel 151. The springs of the two cables 152 are wound in opposite directions and engage two devices 4 of the type shown in Fig.6, which are rotated by a motor unit 153 through two rigid tubular shafts 154 (see also fig.12) sufficiently long to accommodate the cables 152 therewithin when the slidable panel 151 is in its rearmost position.

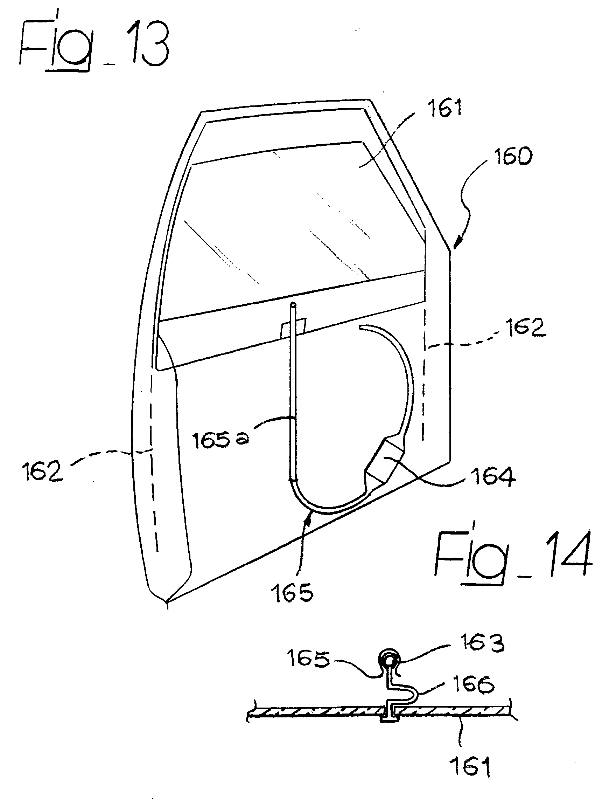

Fig. 13 shows an application of the invention to a window-pane control device for a motor-vehicle door. A door 160 comprises a pane 161 vertically slidable between guides 162 in the door. The pane 161 is driven by a flexible cable 163 of the type shown in fig. 6 passing through a nut member according to the invention integrated within a motor unit 164. The cable is guided within a flexible tube 165 connected to the housing of motor 164 and easily adaptable to the arrangement and the space within the door. Fig. 14 shows the connection of cable 163 to the pane 161, which is achieved by a flexible strip 166, which takes up the variations in the horizontal distance between the vertical portion 165a of the tube 165 and the pane 161 due to the curvature of the door and guides 162.

Of course, without prejudice to the principle of the invention, the constructional details and the embodiments may vary widely with respect to what has been described and illustrated herein merely to provide examples, without thereby departing from the scope of the present invention.

## Claims

1. A transmission device comprising:
a rotating member (9) having the function of a nut, and
a screw (3), prevented from rotation, which engages the rotating member (9), so as to convert a rotation of said member (9) into a translation of the screw (3),
characterized in that said rotating member (9) having the function of nut comprises a planet-carrier member (9) driven in rotation about the axis (3a) of the screw (3), and at least one planet (14) mounted so that it is free to turn on the planet-carrier member (9) about an axis (15) that is parallel to and set at a distance from the axis (3a) of the screw (3), said planet (14) having at least one peripheral collar (16) which is arranged in a plane perpendicular to the axis (3a) of the screw (3) and engages, by rolling contact, a respective portion of the bottom of the thread of the screw (3), in such a way that, as a result of the rotation of the planet-carrier member (9), the planet (14) rolls around the screw (3) causing the latter to translate axially due to the engagement of said collar (16) against the sides of the respective portion of the thread of the screw (3).

2. A transmission device according to Claim 1,
characterized in that said planet (14) comprises a plurality of collars (16) which are arranged in planes parallel to one another and engage respective portions of the bottom of the thread of the screw.

3. A transmission device according to Claim 1,
characterized in that said planet-carrier member (9) carries a plurality of planets (14) arranged at angular distances apart.

4. A transmission device according to Claim 1,
characterized in that the screw (3) consists of a rigid bar.

5. A transmission device according to Claim 1,
characterized in that the screw (3) consists of a flexible cable (22) on which a helical spring (23) is wound.

6. A transmission device comprising:
a rotating member (315) having the function of nut, and
a bar (300) with circular cross section having the function of screw with prevented rotation, which engages the rotating member (315) to convert a rotation of said member (315) into a translation of the bar (300),
characterized in that said rotating member (315) with the function of nut comprises a planet-carrier member driven in rotation about the axis (300a) of the bar (300), and at least one planet (314) mounted so that it is free to turn on said planet carrier (315) about an axis (314a) set a distance from the axis (300a) of the bar (300) and inclined both with respect to the axis (300a) of the bar (300) and with respect to a plane perpendicular to the axis (300a) of the bar (300), said planet (314) being in the form of a roller which has a circular section increasing from the centre towards the ends and being pressed in contact with the bar (300), in a point corresponding to its minimum section, by elastic means set between the structure of the planet-carrier member (315) and the roller (314).

7. A transmission device according to Claim 6,
characterized in that it comprises a plurality of rollers (314) that are set at angular distances apart.

8. A linear actuator characterized in that it comprises an electric motor (2) and a transmission device according to any of the foregoing claims, said planet-carrier member (9; 315) being driven in rotation by said electric motor (2).

9. A linear actuator according to Claim 8,
characterized in that said planet-carrier member (9) is driven directly by said electric motor (2).

10. A linear actuator according to Claim 9,
characterized in that said planet-carrier member (9) is arranged inside a casing (13) and is rigidly connected to one end of the casing (2a) of the electric motor (2) and in that the shaft (7) of the electric motor (2) is tubular and is traversed by said screw (3).

11. A linear actuator according to Claim 8,
characterized in that said planet-carrier member (9) is driven in rotation by the motor (2) by means of a transmission (17) about an axis (3a) which is parallel to and set at a distance from the axis of the motor (2).

12. A linear actuator according to Claim 8,
characterized in that said planet-carrier member (9) is driven in rotation by the motor (2) by means of a transmission (17) about an axis (3a) which is perpendicular to the axis of the motor (2).

13. A linear actuator according to Claim 8,
characterized in that it comprises a further transmission device according to any of Claims 1-5, and in that said motor (2) drives both devices (4) simultaneously.

14. A linear actuator according to Claim 13,
characterized in that the planet-carrier members (9) of the two transmission devices (4) are both connected by respective transmissions to the shaft of the motor (2) in such a way that the motor (2) controls translation of two screws (3) having their axes parallel to and set at a distance from the axis of the motor (2).

15. A linear actuator according to Claim 13,
characterized in that the planet-carrier member (9) of one of the two transmission devices (4) is driven directly by the motor (2) and is in turn connected by a transmission (27) to the planet-carrier member (9) of the other device (4) in such a way that the motor (2) controls translation of two screws (3, 30), one of which has its axis coinciding with the axis of the motor (2), and the other has its axis parallel to and set at a distance from the axis of the motor (2).
